# EUROPÄISCHE PATENTSCHRIFT

(11) **EP 2 912 944 B1**
(45) Veröffentlichungstag und Bekanntmachung des Hinweises auf die Patenterteilung: **02.11.2016**
(21) Anmeldenummer: 14405018.4
(22) Anmeldetag: 27.02.2014
(51) Int. Cl.: A01L 1/00, A01L 1/04, A01L 7/00

(54) **Verbessertes Hufeisen und Verfahren zur Ausbildung verbesserter Hufeisen**
Improved horseshoe and method for forming improved horseshoes
Fer à cheval amélioré et procédé de réalisation de fers à cheval améliorés

(43) Veröffentlichungstag der Anmeldung: 02.09.2015
(73) Patentinhaber: Wehrli, Stefan, 9216 Heldswil (CH)
(72) Erfinder: Wehrli, Stefan, 9216 Heldswil (CH)
(74) Vertreter: EGLI-EUROPEAN PATENT ATTORNEYS

(56) Entgegenhaltungen:
- WO-A1-2009/018297
- DE-C- 229 090
- US-A- 4 881 600

## Beschreibung

Die Erfindung betrifft ein Hufeisen (Siehe z.B. US 4.881.600 A1). Weiterhin betrifft die Erfindung ein Verfahren zur Ausbildung eines Hufeisens, wobei insbesondere ein Hufeisen vom vorgeschlagenen Typ zur Anwendung kommen kann.

Da sich Nutztiere heutzutage oftmals nicht mehr in ihrem natürlichen Lebensumfeld aufhalten, kommt es regelmässig vor, dass bei den betreffenden Nutztieren spezielle Sorge dafür getragen werden muss, dass sich diese Veränderung der Lebensgewohnheiten nicht nachteilig auf deren Gesundheit auswirkt.

Bei Huftieren, wie beispielsweise bei Pferden, äussern sich beispielsweise die veränderten Lebensgewohnheiten durch den Einsatz als Nutztier darin, dass das natürliche Wachstum der Hufe mit der Abnutzung derselben nicht mehr übereinstimmt. Dies rührt daher, dass Pferde beispielsweise oftmals auf vergleichsweise harten Untergründen (zum Beispiel Kopfsteinpflaster oder Asphalt) geritten werden was in einer erhöhten Abnutzung der Hufe resultiert. Dementsprechend werden Pferde schon seit etlichen Jahrhunderten mit Hufeisen beschlagen, um die Abnutzung der Hufe zu mindern. Umgedreht kann es auch erforderlich sein, dass die Hufe durch mangelnde Abnutzung korrigiert werden müssen (was beispielsweise auch dann eintreten kann, wenn Pferde beschlagen sind, da unter den Hufeisen nunmehr keinerlei Abnutzung des Hufs mehr eintritt).

Trotz des jahrhundertelangen Einsatzes von Hufeisen und des unbestreitbar vorhandenen positiven Nutzens derselben, weisen diese zum Teil auch gewisse Probleme auf.

Ein Problem, welches bekannt ist und welches auch schon mehrfach durch Verbesserungen von Hufeisen angegangen worden ist, ist die Gelenkbelastung des Tieres, wenn das harte Material des Hufeisens mit einer harten Oberfläche in Kontakt kommt. Insbesondere bei Pferden im Rennsport stellt dies ein grosses Problem dar, da heutige Rennbahnen häufig über harte Oberflächen verfügen. Gepaart mit der bei Rennveranstaltungen systemimmanent einhergehenden hohen Bewegungsgeschwindigkeit der Pferde (Galopprennen, Trabrennen, Springreiten und dergleichen), kommt es hierbei zu sehr grossen Gelenkbelastungen des Tieres, was mit der Zeit entsprechende Gesundheitsstörungen bewirken kann.

Zur Vermeidung derartiger Probleme wurde bereits die Verwendung von puffernden Materialien im Zusammenhang mit Hufeisen vorgeschlagen. Beispielsweise wurde in der US-Patentanmeldung US 2012/0279184 A1 die Verwendung einer Art flächigen Hufplatte aus einem Elastomermaterial vorgeschlagen, welches anstelle von Hufeisen Verwendung findet. In der Europäischen Patentanmeldung EP 1 634 495 A1 wiederum wurde vorgeschlagen, ein Hufeisen mit einer "klassischen Formgebung" mehrlagig auszubilden, nämlich mit einer Oberschicht sowie einer Unterschicht aus einem metallischen Material sowie einer Zwischenlage aus einem elastischen Material. Ein Nachteil der dort vorgeschlagenen Bauweisen besteht darin, dass es zu gewissen seitlichen Verschiebungen zwischen Oberseite und Unterseite des betreffenden Hufeisens kommen kann, wenn dieses belastet wird. Speziell im Rennsport kann eine derartige "Wackelbewegung" einen Zeitverlust bewirken, der über Sieg oder Niederlage entscheiden kann. Derartige gedämpfte Hufeisen haben sich daher nicht durchsetzen können.

Um den beschriebenen Nachteil zu vermeiden, wurde beispielsweise in der US-Patentanmeldung US 2007/0181314 A1 vorgeschlagen, bei einem Hufeisen (nämlich im Zehenbereich des Hufeisens) einen Randbereich eines "klassisch geformten Hufeisens" aus Metall zu entfernen und den betreffenden Bereich gewissermassen durch ein Elastomermaterial zu ersetzen. Speziell wird die Verwendung von Polyurethan als "Dämpfungsmaterial" vorgeschlagen. Ein Nachteil bei dem dort beschriebenen Hufeisen besteht insbesondere darin, dass eine Dämpfungswirkung zwar vorhanden ist, aber nur zu ganz speziellen, zeitlich gesehen sehr kurzen Zeitabläufen des Bewegungsablaufs eine Wirkung entfalten kann. Bei einer Anordnung in einem Zehenbereich des Hufs tritt nur eine Dämpfungswirkung beim Abdrücken auf, jedoch nicht beim Aufkommen des Hufs auf den Boden. Dementsprechend findet die erwünschte gelenkschonende Wirkung nur teilweise statt, was entsprechend unerwünscht ist.

Ein weiteres, oftmals verkanntes Problem ist, dass Pferde als natürliche Lebewesen keinen "perfekten Aufbau" aufweisen. So sind beispielsweise individuelle, orthopädische Eigenheiten bei Pferden vorhanden. Rein beispielhaft können diese gewisse Asymmetrien im Körperbau aufweisen. Ein besonders häufig auftretendes Beispiel ist, dass insbesondere auch ein Huf leicht asymmetrisch wachsen kann. Wenn beispielsweise an einer Seite eines Hufs ein etwas stärkeres Wachstum als an der gegenüberliegenden Seite auftritt, so kommt es vor, dass die Lage des Hufbeins (was den Knochenaufbau betrifft) und des Hufs (was das Hornmaterial des Hufs betrifft) um etliche Millimeter auseinanderfallen kann. Ein derartiger "seitlicher Versatz" von Huf und Hufbein ist im Übrigen regelmässig anzutreffen.

Klassische Hufeisen haben den Nachteil, dass diese derartigen anatomischen Eigenheiten von Tieren, insbesondere individuell von Tier zu Tier unterschiedlichen anatomischen Eigenheiten, nicht Rechnung tragen. Auch dies führt mit der Zeit zu einer entsprechenden Belastung des Tieres (insbesondere des Knochen- und Gelenkapparats), was unerwünscht ist.

Dementsprechend besteht die Aufgabe der Erfindung darin, ein Hufeisen vorzuschlagen, welches gegenüber im Stand der Technik bekannten Hufeisen (gegebenenfalls auch Hufeisenbausätzen) Vorteile aufweist. Darüber hinaus ist es die Aufgabe der Erfindung, ein Verfahren zur Ausbildung eines Hufeisens vorzuschlagen, welches gegenüber im Stand der Technik bekannten Verfahren zur Ausbildung von Hufeisen Vorteile aufweist.

Die vorliegende Erfindung löst diese Aufgaben.

Es wird vorgeschlagen, ein Hufeisen, welches ein Hufsohlenelement sowie ein Bodenkontaktelement aufweist, derart auszubilden, dass das Hufsohlenelement sowie das Bodenkontaktelement derart dimensioniert und anpassbar sind, dass in einem an einem Huf montierten Zustand des Hufeisens das Hufsohlenelement zumindest im Wesentlichen korrespondierend zum Huf und das Bodenkontaktelement zumindest im Wesentlichen korrespondierend zum Hufbein und/oder zur weissen Linie eines Hufs ausgerichtet werden kann. Die grundsätzliche Erkenntnis der vorliegenden Erfindung besteht darin, dass ein Hufeisen gleichzeitig einerseits möglichst optimal an den Kontakt mit dem Huf angepasst werden sollte, andererseits aber auch möglichst optimal an den Bewegungsapparat des Tieres angepasst sein sollte. Verblüffenderweise ist dies mit der vorliegenden Erfindung vergleichsweise einfach realisierbar. Gewissermassen wird es bei Verwendung des vorgeschlagenen Hufeisens möglich, dass mithilfe des Hufeisens eine Huf-Fehlstellung korrigiert werden kann bzw. einen "optimal gewachsener Huf" simuliert werden kann. Hierdurch kann ein deutlich verbessertes Ausnutzen des Kraftpotenzials des Tieres realisiert werden und gleichzeitig eine optimale Schonung des Tieres (insbesondere hinsichtlich seines Bewegungsapparates) realisiert werden. Dies gilt insbesondere auch beim Vorhandensein von gewissen anatomischen "von der Norm abweichenden" Eigenschaften des individuellen Tieres.

Im Übrigen hat sich in ersten Versuchen ergeben, dass zumindest als "brauchbare Näherung" eine Anpassung an die weisse Linie des Hufs geeignet ist, um eine relativ weitgehende Anpassung an das Hufbein des Tieres zu realisieren. Der Vorteil bei einer Anpassung an die weisse Linie des Hufs besteht darin, dass diese ohne Weiteres mit blossem Auge sichtbar ist. Dementsprechend kann der Aufwand beim Beschlagen des Tieres verringert werden. Eine möglichst optimale Anpassung an das Hufbein des Tieres erfordert demgegenüber zumindest eine grosse Erfahrung des Hufschmieds (wobei dieser die Lage des Hufbeins beispielsweise durch Betrachten und Betasten des Beines des Tieres zumindest näherungsweise oder aber auch beispielsweise durch Röntgengeräte vergleichsweise genau ermitteln kann). Möglich ist es im Übrigen auch, in Abhängigkeit von der konkreten Situation entweder eine Optimierung ans Hufbein mittels Messapparatur oder aber auch der Einfachheit halber an die weisse Linie vorzunehmen. Beispielsweise könnte bei einem Rennpferd für das "alltägliche Training" eine Anpassung an die weisse Linie des Hufs als ausreichend empfunden werden; vor einem Rennen wird dagegen eine optimale Anpassung an das Hufbein durch Einsatz von Röntgengeräten sichergestellt. Durch den vorgeschlagenen Aufbau des Hufeisens wird es möglich, dass das Hufeisen hinsichtlich seiner Eigenschaften besonders gut auf unterschiedliche Aspekte hin optimiert werden kann, ohne dass eine unwirtschaftlich grosse Anzahl an einzelnen Hufeisen zur Verfügung gestellt werden muss. Insbesondere hat sich herausgestellt, dass es durch die vorteilhafte Anpassbarkeit des vorgeschlagenen Hufeisens mit vergleichsweise wenigen unterschiedlich grossen Hufeisen (sofern überhaupt eine Mehrzahl an unterschiedlich dimensionierten Hufeisen erforderlich ist) möglich ist, eine besonders grosse Bandbreite an effektiven Hufbeschlagmöglichkeiten zur Verfügung stellen zu können, die unterschiedlichsten (orthopädischen) Eigenheiten von Tieren, wie insbesondere von Pferden, Rechnung tragen kann. Insbesondere ist es besonders einfach möglich, auch auf individuelle Unterschiede im Körperbau gewissermassen "auf das einzelne Tier heruntergebrochen" eingehen zu können. Dabei ist es sowohl möglich, dass beispielsweise von einem Hufschmied bzw. von einem Hufbeschlagschmied beim Beschlagen des Tieres eine hervorragende Anpassung an das individuelle Tier möglich ist, wobei jedoch in der Regel nur vergleichsweise einfache, kleinere Anpassungsarbeiten des Hufeisens erfolgen müssen (typischerweise lediglich das Bohren einzelner Löcher, sowie das Entfernen von einigen Überständen). Hierbei gilt der Grundsatz, dass je mehr unterschiedliche "Ausgangs-Typen" von "vorkonfektionierten Hufeisen" vorhanden sind (also aus je mehr unterschiedlichen Hufeisen ein Satz von Hufeisen besteht), umso weniger individuelle Anpassungsarbeiten vor Ort erforderlich sind (und umgekehrt). Durch das Vorsehen einer sinnvollen Anzahl an unterschiedlichen Hufeisen zur Ausbildung eines "Satzes" kann einerseits eine besonders weitgehende Anpassbarkeit an das individuelle, zu beschlagende Tier gewährleistet werden, andererseits aber auch ein für den Hufschmied vertretbarer Aufwand bei der Lagerhaltung. Was jeweils einen sinnvollen Kompromiss darstellt, kann dabei auch vom jeweiligen Einsatzgebiet abhängen. So ist beispielsweise im Pferderennsport die Kostensensitivität im Allgemeinen deutlich geringer, als dies bei Nutztieren (beispielsweise Waldarbeitspferden) der Fall ist. Dementsprechend kann beispielsweise für Rennpferde eine Lagerhaltung mit entsprechend "dicht zueinander benachbarten" Hufeisen-Abstufungen vorgesehen werden, wohingegen sich bei reinen Arbeitstieren eine weniger "feinunterteilte" Lagerhaltung als ausreichend erweisen kann. Selbstverständlich können auch noch weitere Erwägungen einfliessen, wie beispielsweise die Erwägung, ob es sich um einen "fahrenden Hufschmied" handelt (der sämtliche Gerätschaften in einem Fahrzeug mitführen muss) oder ob es sich um einen Hufschmied handelt, der in einer festen Arbeitsstätte arbeitet. Das Hufsohlenelement dient dem in der Regel unmittelbaren Kontakt mit dem Huf des Tieres. Es entspricht somit in gewisser Weise der "Oberseite eines klassischen Hufeisens". Das Hufsohlenelement kann in grundsätzlich bekannter Weise mit dem Huf verbunden werden (beispielsweise durch Hufeisennägel, welche speziell im Bereich der weissen Linie des Hufs eingeschlagen werden). Anstelle von derartigen "klassischen Befestigungsmöglichkeiten" sind jedoch auch sonstige, beliebige Befestigungsmöglichkeiten denkbar, wie beispielsweise ein Festkleben, die Verwendung von Schrauben (mit Schraubengewinde), von klipsartigen Verbindungselementen und dergleichen (auch in Kombination). Sind mehrere Typen von "vörkonfektionierten Hufeisen" vorhanden, so wird jenes ausgewählt, das möglichst weitgehend mit der Formgebung des Hufs korrespondiert (insbesondere ohne dass ein "übertriebenes Mass" an Anpassungsarbeiten erfolgen muss). Aufgrund des vorgeschlagenen vorkonfektionierten und anpassbaren Aufbaus des Hufeisens ist es möglich, dass das Hufsohlenelement von Grösse, Dicke, Material, Formgebung, sonstigen Einrichtungen usw. möglichst optimal auf die Aufgabe, den Kontakt mit dem Huf sicherzustellen, angepasst werden kann. Das Bodenkontaktelement wiederum dient einem möglichst vorteilhaften Kontakt mit dem Boden. Korrespondierend zum in Bezug auf das Hufsohlenelement gesagte, kann auch das Bodenkontaktelement hinsichtlich seiner Grösse, Formgebung, Material, sonstigen Eigenschaften und dergleichen auf den jeweiligen Einsatzzweck optimiert werden. Insbesondere können Hufeisen mit unterschiedlichen Bodenkontaktelementen für unterschiedliche Böden zur Verfügung gestellt werden (beispielsweise mit bestimmten Bodenkontaktelemente, welche für Waldböden besonders geeignet sind, wie dies beispielsweise bei Waldarbeitspferden der Fall ist; mit Bodenkontaktelementen, welche für Galopprennen, Trabrennen, Springreiten bzw. Dressurreiten optimiert sind). Darüber hinaus kann das Bodenkontaktelement auch besonders vorteilhaft auf eine besonders vorteilhafte Kraftübertragung vom Gelenkapparat des Tieres in den Boden hinein optimiert werden. Insbesondere kann in diesem Zusammenhang hinsichtlich Grösse und Lage des Bodenkontaktelements eine Ausrichtung auf das Hufbein des betreffenden Tieres erfolgen (was insbesondere durch eine anfängliche "Überdimensionierung des Hufsohlenelements und die anschliessende Ablängung allfälliger Überstände ermöglicht werden kann"). Auf diese Weise kann beispielsweise ein "seitliches Auseinanderfallen" von Hufbein und Huf (hervorgerufen durch unterschiedliches Hufwachstum in unterschiedlichen Bereichen) aufgefangen werden, was sich für das Tier als besonders gelenkschonend erweisen kann. Dementsprechend kann (sofern vorhanden) aus der vorhandenen Vielfalt an "Ausgangshufeisen" (welche insbesondere für den jeweiligen Einsatzzweck optimierte Bodenkontaktelemente aufweisen können) das jeweils passendste "Ausgangshufeisen vor Ort herausgesucht werden" und anschliessend nach einer allfälligen gewissen Nachbearbeitung desselben Verwendung finden. Der Vollständigkeit halber soll darauf hingewiesen werden, dass ein Hufeisen vom vorgeschlagenen Typ selbstverständlich auch noch weitere Einrichtungen aufweisen kann, wie beispielsweise Dämpfungselemente, wovon später noch die Rede sein wird. Allfällige Huf-Kappen sind in einem "Auslieferungszustand des Hufeisens" vorzugsweise plan zum Hufsohlenelement ausgebildet. Auch die sonstigen Teile des Hufeisens, insbesondere das Hufsohlenelement des Hufeisens, sind in einem "Auslieferungszustand" des Hufeisens typischerweise als ebene Platte/flache Platte ausgebildet. Ein Teil der "Anpassungsarbeit" zur Anpassung des Hufsohlenelements an den Huf besteht in der Regel darin, dass die Huf-Kappen geeignet angepasst werden (insbesondere durch einen Umbiegevorgang).

Als besonders vorteilhaft hat es sich erwiesen, wenn das Hufeisen in Form eines Hufeisenbausatzes vorliegt, derart, dass Hufsohlenelement und Bodenkontaktelement als getrennte Einzelelemente vorliegen und mittels zumindest eines Verbindungselements miteinander verbunden werden können, wobei bevorzugt das Hufsohlenelement, das Bodenkontaktelement und/oder das zumindest eine Verbindungselement derart ausgebildet und eingerichtet sind, dass eine unterschiedliche Festlegbarkeit des Hufsohlenelements relativ zum Bodenkontaktelement möglich ist. Es hat sich gezeigt, dass es hierdurch auf einfache Weise möglich ist, den Krafteintrag noch weitergehend optimieren zu können, da Form und Lage des Bodenkontaktelements besonders weitgehend korrespondierend zum Hufbein des Tieres ausgerichtet werden können. Dies kann nicht nur zu einem noch höheren Krafteintrag führen, weil der Kraftschluss zwischen Gelenkapparat des Tieres und Boden besser wird, sondern kann darüber hinaus auch zu einer noch geringeren Gelenkbelastung des Tieres führen (insbesondere durch optimalen Krafteintrag in das Gelenksystem des Tieres). Überraschenderweise hat sich auch gezeigt, dass der Krafteintrag gewissermassen "überproportional" steigen kann, da in ersten Versuchen die mit den vorliegend vorgeschlagenen Hufeisen beschlagenen Tiere aufgrund der geringeren körperlichen Belastung mehr "Mut und Willen" zeigten, zusätzliche Kraftreserven zu mobilisieren, was in nochmals erhöhten Leistungswerten resultieren kann (was nun nicht nur im Zusammenhang mit einem Hufeisenbausatz gilt). Bei Verwendung anfänglich getrennter Hufsohlenelemente und Bodenkontaktelemente ist es möglich, bei Verwendung einer vergleichsweise geringen Anzahl an Hufsohlenelementen und/oder Bodenkontaktelementen zu einer besonders grossen Anzahl an erzielbaren "resultierenden Hufeisen" zu gelangen (gewissermassen in Form eines "modularen Bausatzes"). Das Zusammenfügen der Bauteile kann dabei in beliebiger Weise unter Verwendung von grundsätzlich im Stand der Technik bekannten Verbindungselementen erfolgen. Rein beispielhaft ist in diesem Zusammenhang an Nieten, Nägel, Schrauben, Klebstoffe, Rastverbindungen und dergleichen zu denken. Derartige Verbindungen können auch vergleichsweise einfach "vor Ort" durch einen Hufschmied ausgebildet werden. Hierdurch kann eine besonders weitgehende individuelle Anpassbarkeit an das jeweilige Tier realisiert werden. Im Übrigen ist es auch denkbar (und auch vorteilhaft) fertige, bereits zusammengefügte Hufeisen mit einem modularen Hufeisenbausatz (bei dem die Einzelbauteile "vor Ort" zusammengefügt werden müssen) zu kombinieren. Es hat sich gezeigt, dass manche "extreme relative Lageanordnungen" von Hufsohlenelement und Bodenkontaktelement vergleichsweise selten auftreten. Derartige "Extremsituationen" können besonders vorteilhaft durch einen "modularen Bausatz" abgedeckt werden (was insbesondere zur Folge hat, dass der Lagerhaltungsaufwand für den Hufschmied deutlich reduziert werden kann, ohne dass der Arbeitsaufwand unverhältnismässig ansteigt). Durch eine variable Relativ-Anordnung von Hufsohlenelement und Bodenkontaktelement ist mit einem "modularen Bausatz" praktisch jede in der Praxis realistischerweise auftretende "Fehlstellung" äbdeckbar. Es wird darauf hingewiesen, dass bei der variablen Lage von Bodenkontaktelement und Hufsohlenelement zueinander nicht nur an eine seitliche Verschiebbarkeit der beiden Elemente, sondern insbesondere auch an ein "Schrägstellen" zu denken ist (entweder durch Vorsehen von in gewissem Umfang keilförmig geformten Bodenkontaktelementen oder aber auch durch das Verwenden zusätzlicher Keilelemente). Ein derartiges Verdrehen kann sowohl in Längsachse des Tieres (Ausgleich von "seitlichen Fehllagen"), in Querachse des Tieres (Ausgleich von Variationen im Neigungswinkel des betreffenden Hufs), aber auch in Hochachse des Tieres gesehen (Verdrehen von Bodenkontaktelement und Hufsohlenelement gegeneinander; in diesem Fall sind üblicherweise keine keilförmigen Elemente erforderlich) realisiert werden. Derartige "keilförmige Elemente" können im Übrigen auch bei einteiligen/einstückigen Hufeisen berücksichtigt werden. Derartige "keilförmige Elemente" sind insbesondere auch zur Korrektur von palmaren und/oder lateromedialen Winkeldifferenzen eines Hufes geeignet.

Denkbar ist es aber auch, dass bei dem Hufeisen das Hufsohlenelement und das Bodenkontaktelement im Wesentlichen einteilig, insbesondere im Wesentlichen einstückig ausgebildet sind. Hierdurch können speziell die "vorkonfektionierten" Hufeisen besonders einfach und kostengünstig hergestellt werden und gleichzeitig eine besonders hohe Belastbarkeit und Standzeit der Hufeisen realisiert werden.

Insbesondere wird vorgeschlagen, dass das Hufeisen, insbesondere das Bodenkontaktelement und/oder das Hufsohlenelement, asymmetrisch ausgebildet sind und/oder dass das Hufeisen als ein Linkshufeisen, als ein Rechtshufeisen, als ein Vorderhufeisen und/oder als ein Hinterhufeisen ausgebildet ist. Auch Pferdebeine sind chiral aufgebaut, das heisst, dass ein linkes Bein gewisse Unterschiede zu einem rechten Bein aufweist. Mittels der vorgeschlagenen asymmetrischen Ausbildung der betreffenden Hufeisen ist es möglich, diese Chiralität von linken und rechten Beinen zu berücksichtigen, sodass es in der Regel möglich ist, für das Pferd einen besonders gelenkschonenden Hufeisenbeschlag zur Verfügung zu stellen. Die unterschiedliche Chiralität von linken und rechten Beinen äussert sich dabei üblicherweise in einer Asymmetrie bzw. Unterscheidbarkeit der betreffenden Bodenkontaktelemente (insbesondere können hier auch unterschiedliche latero-mediale Winkel Berücksichtigung finden). Aber auch die Hufe selbst sind üblicherweise chiral, das heisst, dass linke und rechte Hufe in der Regel voneinander unterscheidbar sind. Hier äussert sich die Chiralität in der Regel in einer unterschiedlichen Ausbildung der Hufsohlenelemente (insbesondere asymmetrischer Aufbau). Es ist in diesem Zusammenhang darauf hinzuweisen, dass die Asymmetrie in der Regel vergleichsweise klein ist und tendenziell mit dem blossen Auge nur zu erkennen ist, wenn man das betreffende Hufeisen mit einer "gewissen Vorkenntnis" betrachtet. Ein typischer Wert für die Asymmetrie zwischen den beiden Eisen beträgt etwa 6 % der Bemassung. Aber auch andere Werte, insbesondere 1 %, 2 %, 3 %, 4 %, 5 %, 6 %, 7 %, 8%, 9 %, 10 %, 11 % oder 12 % können sich als "exakter Wert" bzw. Startwert und/oder Endwert eines "Asymmetrieintervalls" als geeignet erweisen. Insbesondere ist es auch denkbar, dass ein Satz an Hufeisen auch unterschiedliche Hufeisen mit unterschiedlichem Ausmass an Asymmetrie aufweist, sodass beispielsweise in einem Satz Hufeisen mit einer Asymmetrie von 4 %, 5 %, 6 %, 7 % und 8 % vorhanden sind, um im Wesentlichen alle in der Realität vorkommenden Werte abdecken zu können und darüber hinaus "ausreichend genau" am erforderlichen Wert liegen können. Der Ergänzung halber wird darüber hinaus darauf hingewiesen, dass auch zwischen Vorder- und Hinterbeinen eines Pferds (bzw. den hierzu korrespondierenden Hufen) unterschieden werden sollte. Speziell ein Winkel, der einer Verdrehung der Achse in Richtung einer Querachse des Tieres entspricht (palmarer Winkel; Winkel zwischen Hufbeinunterseite und Boden bzw. Hufunterseite), ist bei einer Betrachtung von Vorderbein einerseits und Hinterbein andererseits in der Regel zu beachten. Insbesondere können sich Vorderhufeisen und Hinterhufeisen durch Art, Anzahl und Ausbildung von Rutschhemmeinrichtungen unterscheiden (typischerweise sind die Hinterbeine von Pferden kräftiger ausgebildet, als deren Vorderbeine). Durch die vorgeschlagene unterschiedliche Ausbildung und damit auch Anpassbarkeit auf jedes einzelne Bein in vorzugsweise individueller Art und Weise kann eine nochmals verbesserte Kraftausbeute des Tieres bei gleichzeitiger grosser Gelenkschonung realisiert werden.

Von Vorteil kann es sein, wenn bei dem vorgeschlagenen Hufeisen, insbesondere bei einem Hufsohlenelement, ein Übermass vorgesehen ist und/oder wenn das Hufeisen, insbesondere das Hufsohlenelement, eine verringerte Anzahl, bevorzugt im Wesentlichen keine, besonders bevorzugt keine Einrichtung zur Aufnahme eines Hufbefestigungmittels aufweist. Auf diese Weise ist es möglich, ein besonders weitgehend "universell verwendbares Ausgangs-Hufeisen" (bzw. - im Falle eines Satzes - mehrere "universell verwendbare Ausgangs-Hufeisen") zur Verfügung zu stellen, wobei die "individuelle Anpassung" mittels einfacher, vor Ort ohne weiteres beherrschbarer Bearbeitungsvorgänge erfolgen kann. Insbesondere können Einrichtungen zur Aufnahme eines Hufbefestigungsmittels einfache Bohrlöcher sein, die mit einem einfachen Bohrer ausgebildet werden können. Selbst für den Fall, dass ein Gewindegang vorzusehen ist, können diese vergleichsweise problemlos mit einem Gewindeschneider "vor Ort" ausgebildet werden. Ablängvorgänge können beispielsweise unter Verwendung von Blechscheren, Feilen, Metallsägen, Trennschleifern und/oder Schleifmaschinen durchgeführt werden. Es wird darauf hingewiesen, dass derartige Werkzeuge oftmals ohnehin bereits vorhanden sind.

Bevorzugt ist es darüber hinaus, wenn bei dem Hufeisen das Bodenkontaktelement und/oder das Hufsohlenelement zumindest eine Rutschhemmeinrichtung aufweisen, insbesondere eine auf Formgebung beruhende Rutschhemmeinrichtung, besonders bevorzugt eine richtungsselektiv wirkende Rutschhemmeinrichtung. Hierdurch kann ein optimaler Sitz des Hufeisens am Huf gewährleistet werden und darüber hinaus ein im Wesentlichen optimierter Krafteintrag in den Boden gewährleistet werden, wodurch die Leistung, die das Pferd aufbringen kann, möglichst optimal genutzt werden kann. Eine denkbare Rutschhemmeinrichtung für ein Hufsohlenelement sind beispielsweise Profilrillen, die ein Verschieben des Hufsohlenelements gegenüber dem Huf vermeiden helfen. Darüber hinaus haben sich auch grundsätzlich bekannte, sogenannte Kappen bewährt (rechtwinklig abgeknickte nasenartige Vorsprünge im Bereich der Hufzehe; bei "klassischen Hufeisen" wird üblicherweise eine einzelne Kappe verwendet. Bei neueren Hufeisenentwicklungen werden zum Teil bereits zwei Kappen verwendet; die Verwendung von zwei Kappen hat sich in ersten Versuchen auch für das vorliegend vorgeschlagene Hufeisen als vorteilhaft erwiesen; insbesondere ist es auch möglich, dass die beiden Kappen leicht asymmetrisch zueinander ausgebildet werden). Eine geeignete Rutschhemmeinrichtung für das Bodenkontaktelement kann beispielsweise in Form von Vorsprüngen, einer profilartigen Ausbildung des Bodenkontaktelements, insbesondere mit vorspringenden Stegen, sowie mithilfe einer Art Widerhakenverzahnung realisiert werden. Speziell bei weicheren Böden kann hierdurch ein besonders guter Krafteintrag in den Boden hinein gewährleistet werden. Eine widerhakenartige Ausbildung kann darüber hinaus das Verletzungsrisiko für das Tier verringern und dennoch einen optimalen Kraftübertrag in die "normale Bewegungsrichtung" gewährleisten. Insbesondere können manche Rutschhemmeinrichtungen als gewissermaßen "optionale Rutschhemmeinrichtungen" ausgebildet sein. Beispielsweise können (typischerweise mit einem Innengewinde versehene) Löcher zur Aufnahme (zum Einschrauben) von Stollen beim Hufeisen (insbesondere beim Bodenkontaktelement) vorgesehen werden (ähnlich, wie bei einem Fußballschuh).

Weiterhin wird vorgeschlagen, das Hufeisen mit einer Stossdämpfungseinrichtung zu versehen, welche bevorzugt als bereichsweise angeordnete Stossdämpfungseinrichtung ausgebildet ist, insbesondere als bereichsweise angeordnete Zwischenlageeinrichtung ausgebildet ist. Bei Verwendung einer Zwischenlageeinrichtung kann eine besonders gute Dämpfungswirkung auf einfache Weise realisiert werden. Ist die Stossdämpfungseinrichtung nur bereichsweise angeordnet (nur ein Teil der Fläche ist mit einer derartigen Lage versehen) und/oder als Zwischenlageeinrichtung angeordnet, ist es darüber hinaus möglich, dass ein "seitliches Verschieben" zwischen Oberseite und Unterseite des schlussendlichen Hufeisens vermieden, zumindest jedoch stark verringert werden kann. Diese Verschiebung von Oberseite und Unterseite gegeneinander kann nämlich einen gewissen Leistungsverlust induzieren, der speziell bei Rennpferden unerwünscht sein kann. Insbesondere kann ein derartiges seitliches Verschieben durch verbleibende Stege, durch verbleibende Torsionsverhinderungsmassnahmen (beispielsweise mittels durch die Stossdämpfungseinrichtung hindurchgehende Stifte, die in Führungshülsen verlaufen) oder aber auch durch in manchen Bereichen erfolgende direkte Kontaktierung von Oberseite und Unterseite des Hufeisens (wie beispielsweise von Bodenkontaktelement und Hufsohlenelement miteinander) erfolgen. Dennoch ist es in der Regel möglich, vergleichsweise grosse Flächen mit einer Stossdämpfungseinrichtung zu versehen, sodass dennoch eine besonders gelenkschonende Ausführungsform realisiert werden kann. Insbesondere ist es auch möglich, dass Stossdämpfungseinrichtungen in mehr als einem Bereich des Hufeisens zu liegen kommen können, also beispielsweise nicht nur in einem Zehenbereich, sondern auch in einem Trachtenbereich bzw. Strahlbereich des Hufs.

Vorgeschlagen wird insbesondere, dass die Stossdämpfungseinrichtung zumindest teilweise aus einem Elastomermaterial und/oder aus einem elastisch federnden Metallmaterial ausgebildet ist. Dabei kann das Elastomermaterial insbesondere der eigentlichen Dämpfung dienen, das federnde Metallmaterial jedoch bewirken, dass ein Verschieben von Oberseite und Unterseite des fertigen Hufeisens unter Belastung weitestgehend verringert wird.

Eine bevorzugte Ausführungsform kann sich ergeben, wenn das Hufeisen, insbesondere das Hufsohlenelement zumindest ein Schraubgewinde zur Aufnahme eines Hufbefestigungsmittels aufweist. In Abkehrung von der üblichen Befestigungstechnik mittels Hufnägeln wird dementsprechend vorgeschlagen, dass Schrauben zur Befestigung dienen sollen. Die Schraubenköpfe können dabei mit "locker angeordneten" Flachelementen (eine Art Beilagscheibe) versehen werden, wobei die Schraubenköpfe gemäss vorliegendem Vorschlag bevorzugt hufseitig (also "oben" bzw. beabstandet vom Hufeisen) angeordnet werden. Die Befestigung des Hufeisens am Huf erfolgt dann durch ein Einschrauben des betreffenden Hufbefestigungsmittels (Hufschraube) in das korrespondierende Schraubgewinde, welches im Bereich des Hufeisens vorgesehen ist. Durch eine derartige Befestigungstechnik kann gegebenenfalls eine besondere Schonung des Hufs realisiert werden.

Vorgeschlagen wird weiterhin, dass bei dem Hufeisen, insbesondere beim Bodenkontaktelement, zumindest bereichsweise eine Abrolleinrichtung vorgesehen ist, insbesondere eine zehenseitige Abrolleinrichtung, eine trachtenseitige Abrolleinrichtung und/oder zumindest eine seitlich wirkende Abrolleinrichtung. Die Abrolleinrichtung kann insbesondere als eine Art Abrundung im betreffenden Bereich ausgebildet sein. Durch eine derartige Abrundung im Bereich der Trachten ("Trachtenlehne") kann das Pferd vergleichsweise sanft auffussen. Das ergibt dann in der Regel weniger Zug auf die Strecksehne und den Fesselträger: Durch den für das Pferd durchaus spürbaren Komfortgewinn, getraut sich dieses in der Regel (so haben erste Versuche gezeigt) weiter nach vorne zu treten, sodass der Raumgriff des Ganges grösser wird und schlussendlich ein Zeitgewinn realisiert wird. Durch eine Abrolleinrichtung im Zehenbereich (welche insbesondere auch als eine Art Abrundung ausgebildet sein kann) kann die Abrollphase bei der Vorwärtsbewegung vergleichsweise früh beginnen. Dadurch werden die Gelenke weniger stark nach hinten durchgebogen und die Beugesehnen weniger stark belastet. Darüber hinaus kann es auch zu einer vergleichsweise grossen Auflagefläche im Zehenbereich des Hufeisens kommen, sodass damit eine starke Traktion einhergehen kann, was wiederum in einem sehr kraftvollen Abfussen des Pferdes resultieren kann. Durch eine (optional oder zusätzlich vorgesehene) seitlich wirkende Abrolleinrichtung können Hebelkräfte, welche auf die seitlichen Bänder der Gelenkflächen wirken, verringert werden. Dadurch fällt es dem Pferd leichter, enge Wendungen durchzuführen. Bevorzugt ist der seitliche Abrollpunkt in Bezug auf die Pferdemitte leicht nach innen versetzt. Erste Versuche haben ergeben, dass dies eine besonders gelenkschonende Ausbildung für das Pferd darstellt.

Sinnvoll ist es, wenn das Hufeisen mit der Möglichkeit ausgebildet wird, eine Unterstützungseinrichtung vorzusehen, insbesondere zumindest eine seitliche Unterstützungseinrichtung und/oder eine Strahlunterstützungseinrichtung, wobei zumindest eine Unterstützungseinrichtung bevorzugt irreversibel mit dem Hufeisen befestigt ist und/oder wird. Eine seitliche Unterstützungseinrichtung kann beispielsweise in den (insbesondere einem, gegebenenfalls auch beiden) Schenkelbereichen des grundsätzlich U-förmig ausgebildeten Hufeisens angeordnet werden. Auf diese Weise können die Gliedmassen des Tieres lateral unterstützt werden. Möglich ist es auch, eine Strahlunterstützung vorzusehen. Dies ist insbesondere dann sinnvoll, wenn mehr Auflagefläche im hinteren Hufbereich erwünscht ist und/oder das Eindringen von Substanzen in den Strahl, insbesondere bei bestimmten Witterungslagen, vermieden werden soll (hier ist insbesondere an Schnee zu denken). Der Strahl stellt die "offene Seite" des grundsätzlich U-förmigen Hufs bzw. Hufeisens dar. Die betreffenden Unterstützungseinrichtungen können auf grundsätzlich beliebige Weise am eigentlichen Hufeisenkörper befestigt werden. Abgesehen von speziellen Fällen, erweist es sich jedoch üblicherweise als sinnvoll, wenn das resultierende Hufeisen grundsätzlich strahlfrei ausgebildet ist (also im Bereich des Strahls kein Material vorhanden ist). Hierdurch ergibt sich eine dem klassischen Hufeisen angenäherte U-förmige Form. Unter normalen Bedingungen ist eine derartige Ausbildung für das Tier auch die komfortabelste Ausbildungsform. Die vorliegend vorgeschlagene irreversible Befestigung kann insbesondere unter Verwendung von Nieteinrichtungen erfolgen. Es hat sich gezeigt, dass reversible Bauteile, wie beispielsweise Schrauben, sich "im Einsatz" lockern können, was unerwünscht ist. Insbesondere bei einem Rennen kann dies zu einem Lockern und gegebenenfalls Abfallen der betreffenden Bauteile führen, was den Unterschied zwischen Sieg und Niederlage bedeuten kann. Dementsprechend werden irreversible Befestigungstechniken bevorzugt; insbesondere Nieten haben sich in diesem Zusammenhang als besonders geeignet erwiesen. Insbesondere sind diese auch deshalb von Vorteil, weil diese eine gewisse Schmutzresistenz im Zusammenhang mit dem Fügevorgang aufweisen (in Ställen muss stets mit einer gewissen Verschmutzung der miteinander zu verbindenden Teile gerechnet werden), andererseits können durch Nieten auch auf einfache Weise unterschiedliche Materialien miteinander verbunden werden. Ein weiterer Vorteil bei der Verwendung von Nieten besteht darin, dass die miteinander zu verbindenden Bauteile auf vergleichsweise einfache Weise hinsichtlich einer variablen Verbindung miteinander "aufgearbeitet" werden können. Derartige Befestigungstechniken können im Übrigens auch bei einem "modularen Bausatz" zur Befestigung von Hufsohlenelement und Bodenkontaktelement aneinander verwendet werden. Eine individuelle Ausrichtung von zwei Bauteilen zueinander und Befestigung aneinander kann dadurch erfolgen, dass in den betreffenden Bauteilen an passender Stelle Löcher eingebracht werden (üblicherweise nachdem man deren Position beispielsweise unter Zuhilfenahme von Schablonen oder dergleichen geeignet markiert hat). Bei der Verwendung von Nieten müssen derartige Löcher im Übrigen kein Innengewinde aufweisen, was den Befestigungsvorgang vereinfacht.

Vorzugsweise weist das Hufeisen zumindest eine Justagemarkierung auf, insbesondere eine Justagemarkierung zur Justage des Hufsohlenelements mit dem Huf und/oder zur Justage der Positionierung von Bodenkontaktelement mit einem Hufbein. Dementsprechend ist insbesondere das Hufsohlenelement und/oder das Bodenkontaktelement mit jeweils zumindest einer Justagemarkierung versehen. Mit derartigen Justagemarkierungen fällt die betreffende, durchzuführende Justage der Bauteile aneinander und/oder am Huf in der Regel besonders leicht. Bei den Justagemarkierungen kann es sich im Übrigen nicht nur um "schriftliche Markierungen" (einschliesslich Justagelinien) handeln, sondern auch beispielsweise um nasenartige Vorsprünge und/oder Ausnehmungen (einschliesslich keilförmige Ausnehmungen oder Löcher). Auch der Huf des Tieres selbst kann mit einer Markierung versehen werden. Hierbei kann es sich um eine Art Farbstift handeln oder aber auch beispielsweise um eine Art von Reisszwecke oder sonstige mechanische Markierungsmittel. Insbesondere können hierbei Markierungsmittel verwendet werden, welche im Zusammenhang mit einer gegebenenfalls verwendeten Messeinrichtung gewissermassen "interagieren". Im Falle einer Röntgenapparatur kann beispielsweise ein röntgenstrahlabsorbierendes Material hierzu genutzt werden (insbesondere Metalle bzw. metallhaltige Pasten sind hierfür sehr gut geeignet).

Weiterhin wird ein Verfahren zur Ausbildung eines Hufeisens vorgeschlagen, wobei das Hufeisen derartig angepasst wird, dass ein den Huf kontaktierendes Hufkontaktelement im Wesentlichen korrespondierend zum Huf ausgebildet und/oder angeordnet wird und ein den Boden kontaktierendes Bodenkontaktelement im Wesentlichen korrespondierend zum Hufbein und/oder zur weissen Linie eines Hufs ausgebildet und/oder angeordnet wird. Bei dem vorgeschlagenen Verfahren kann insbesondere ein Hufeisen vom vorangehenden Typ verwendet werden. Bei einem derartigen Verfahren ergeben sich die vorab genannten Vorteile und Eigenschaften in zumindest analoger Weise. Auch eine Weiterbildung des Verfahrens im Sinne der vorherigen Beschreibung ist selbstverständlich möglich und in der Regel sinnvoll, zumindest in Analogie.

Insbesondere wird vorgeschlagen, dass das Verfahren derart durchgeführt wird, dass das Hufeisen unter Verwendung von Messvorrichtungen individuell an die Masse eines mit dem Hufeisen zu beschlagenden Tieres angepasst wird. Bei Messvorrichtungen sind insbesondere Messvorrichtungen von Vorteil, bei denen die Lage des Hufbeins (und/oder sonstiger Knochen bzw. Gelenke und/oder des Hufs und/oder deren relative Positionierung zueinander) zumindest mittelbar sichtbar wird. Insbesondere ist in diesem Zusammenhang an Röntgengeräte, CTs (für Computertomogramm) oder auch an NMR-Geräte (Nuklearmagnetische Resonanz) zu denken. "Masse" bezieht sich in diesem Zusammenhang nicht auf das "Gewicht", sondern auf die Abmessungen.

Schliesslich wird noch ein Hufeisenbausatz vorgeschlagen, welcher unter Verwendung eines getrennt voneinander ausgebildeten Hufsohlenelements und Bodenkontaktelements unter Verwendung eines Verbindungselements zu einem Hufeisen r führt, insbesondere zu einem Hufeisen vom vorab beschriebenen Typ. Ein solcher Bausatz kann auch für das vorgeschlagene Verfahren genutzt werden. Auch hier ergeben sich die bereits beschriebenen Vorteile und Eigenschaften in zumindest analoger Weise. Auch der Hufeisenbausatz ist selbstverständlich zumindest in Analogie im Sinne der vorherigen Beschreibung weiterbildbar.

Weitere Einzelheiten der Erfindung und insbesondere beispielhafte Ausführungsformen der vorgeschlagenen Vorrichtung und des vorgeschlagenen Verfahrens werden im Folgenden anhand der beigefügten Zeichnungen erläutert. Es zeigen:
- Fig. 1: ein erstes Ausführungsbeispiel für ein Hufeisen in Draufsicht von oben gesehen;
- Fig. 2: das in Fig. 1 gezeigte Ausführungsbeispiel für ein Hufeisen von unten gesehen;
- Fig. 3: unterschiedliche Ansichten eines zweiten Ausführungsbeispiels eines Hufeisens;
- Fig. 4: ein Hufeisen in einer Draufsicht von unten gesehen, welches eine Seitenunterstützungseinrichtung aufweist;
- Fig. 5: ein Ausführungsbeispiel für ein Hufeisen von unten gesehen, welches eine Strahlunterstützungseinrichtung aufweist;
- Fig. 6: das Seitenprofil eines weiteren Ausführungsbeispiels für ein Hufeisen von unterschiedlichen Seiten aus gesehen;
- Fig. 7: einen Huf mit Markierungseinrichtungen und einem beispielhaft eingezeichneten Hufbein in einer schematischen Prinzipskizze;
- Fig. 8: ein für die Anbringung an einem Huf vorbereitetes Hufeisen in einer Draufsicht von oben;
- Fig. 9: ein weiteres Ausführungsbeispiel für ein Hufeisen in unterschiedlichen Ansichten.

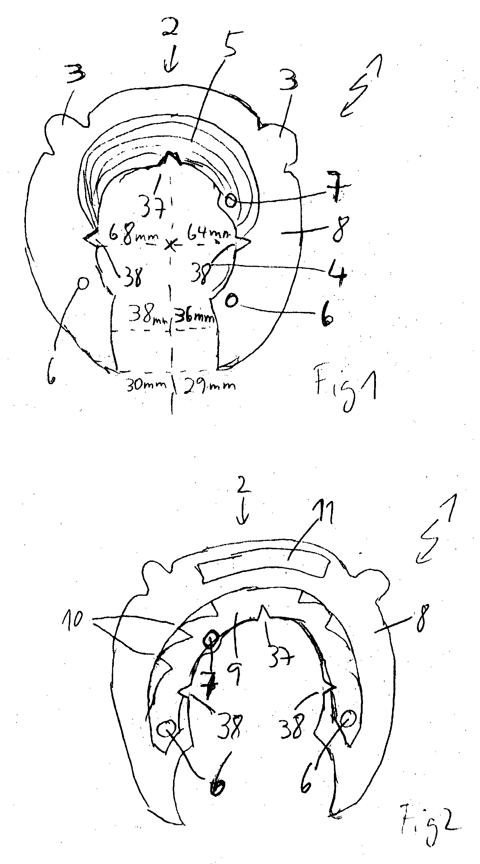

In Fig. 1 ist ein erstes denkbares Ausführungsbeispiel für ein Hufeisen 1 in einer schematischen Draufsicht von oben gezeichnet. Das Hufeisen weist die grundsätzlich bekannte, annähernd U-förmige Formgebung auf. Das vorliegende Hufeisen 1 ist aus einem elastisch federnden Stahlmaterial, vorliegend aus Stahl 52, gefertigt. Die "Vorderseite" des Hufeisens 1, in der Regel als Zehenseite 2 bezeichnet (bei einem Huf wird die Vorderseite als Zehe bezeichnet; die Rückseite dagegen als Trachte; die "V-förmige Ausnehmung" in einem Huf wird wiederum typischerweise als Strahl bezeichnet), ist beim vorliegend dargestellten Ausführungsbeispiel mit zwei, jeweils seitlich vorne angeordneten laschenartigen Vorsprüngen versehen, die durch Umbiegen als Zehenkappen 3 für den Huf dienen. Die seitlich versetzte Anordnung der Zehenkappen 3 ist vorliegend mit gutem Grund gewählt, da auf diese Weise eine bessere Dämpfung beim Abfussen des Tieres ermöglicht wird (worauf im Folgenden noch näher eingegangen wird).

Weiterhin sind im Bereich der Oberseite (Hufseite) des Hufeisens 1 im vorderen (zehenseitigen) Bereich 2 benachbart zur U-förmigen Ausnehmung 4 in der Mitte des Hufeisens 1 (genauer: an der Hufkontaktplatte 8) eine Vielzahl von Riffellinien 5 vorgesehen. Diese Riffellinien 5 dienen einer erhöhten Haftung zwischen Huf und Hufeisen 1. Insbesondere wird ein seitliches Verschieben zwischen Huf und Hufeisen 1 erschwert, wenn das Tier auf dem Hufeisen 1 steht (also der Kontakt zwischen Huf und Hufeisen 1 auf Druck belastet wird).

Wie man anhand der Bemassung, die in Fig. 1 für einige Werte angegeben ist, erkennen kann, ist das Hufeisen 1 leicht asymmetrisch ausgebildet. Vorliegend beträgt die Asymmetrie etwa 6 %. Die angegebenen Werte können jedoch durchaus auch variieren (einschliesslich einer variierenden Asymmetrie). Die gewählten Masse machen das vorgeschlagene Hufeisen 1 besonders geeignet für Pferde. Insbesondere mittels einer Redimensionierung können jedoch auch andere Huftiere mit dem vorliegend vorgeschlagenen Hufeisen 1 beschlagen werden.

Weiterhin sind in Fig. 1 mehrere Justagekerben 37, 38 vorgesehen, nämlich hintere Justagekerben 38 (in Längsrichtung des Hufeisens 1 gesehen etwa mittig am linken und rechten Schenkel angeordnet) und eine vordere Justagekerbe 37 (zehenseitig). Bevorzugt werden die Hufeisen 1 jedoch noch zusätzlich mit einer geeigneten Beschriftung (einschliesslich Symbole) versehen. Insbesondere kann mithilfe einer Beschriftung auf besonders einfache Weise nicht nur zwischen Links- und Rechtshufeisen, sondern auch zwischen Vorder- und Hinterhufeisen unterschieden werden.

Auffällig ist insbesondere, dass das Hufeisen 1 noch nicht mit Nagellöchern 32 versehen ist, die der Durchführung der Hufeisennägel (oder sonstigen Befestigungsmitteln) dienen, mit denen das Hufeisen 1 am Huf befestigt wird. Dieses Fehlen ist nicht etwa ein "Versehen". Vielmehr werden diese Löcher typischerweise erst vom Hufschmied "vor Ort" gebohrt, sodass eine individuelle Anpassbarkeit an die Physiognomie des jeweiligen Pferdes gewährleistet werden kann. Zu diesem Zweck ist die Bemassung des Hufeisens 1 auch etwas "zu gross gewählt". Der Überstand wird dann parallel zur Ausbildung der Hufnagellöcher typischerweise vom Hufschmied vor Ort und in Abhängigkeit von der individuellen Physiognomie des Tieres abgelängt. Im Auslieferungszustand ist das Hufeisen 1 typischerweise im Wesentlichen Plan ausgebildet. Allfällige erforderliche "Abknickungen" können ebenfalls vom Hufschmied "vor Ort" durchgeführt werden (gegebenenfalls nach einem Erhitzungsvorgang; zum Beispiel unter Verwendung eines Schmiedefeuers).

In Fig. 2 ist das in Fig. 1 dargestellte Ausführungsbeispiel eines Hufeisens 1 in einer Draufsicht von unten dargestellt. In dieser Draufsicht ist zu erkennen, dass das Hufeisen 1 neben der Hufkontaktplatte 8 (Hufsohlenelement) noch eine "zweite Ebene" in Form eines Bodenkontaktbogens 9 (Bodenkontaktelement) aufweist. Die Dicke der Hufkontaktplatte 8 beträgt im vorliegend dargestellten Ausführungsbeispiel etwa 4 mm; die Dicke des Bodenkontaktbogens 9 etwa 5 mm. Der Bodenkontaktbogen 9 dient für einen festen Griff mit dem berittenen Boden. Insbesondere kann der Bodenkontaktbogen 9 aufgrund seiner geringeren Auflagefläche besser in Böden eindringen, die eine gewisse Elastizität aufweisen. Auf diese Weise kann ein besonders guter und vorteilhafter Kraftschluss zwischen Tier und Boden zur Verfügung gestellt werden. Zur weiteren Traktionserhöhung ist der Bodenkontaktbogen 9 jeweils an seinen Aussenseiten mit widerhakenartigen Ausnehmungen versehen, die als Rastverzahnung 10 wirken. Die Rastverzahnung 10 sorgt für eine nochmals erhöhte Traktion zwischen Hufeisen 1 und Boden. Ein weiterer Vorteil bei der Rastverzahnung 10 ist, dass diese erhöhte Traktion bevorzugt in eine Richtung wirkt. Dadurch kann beim Vorwärtsreiten eine besonders hohe Traktion zur Verfügung gestellt werden. Bei einem plötzlichen Abbremsen kann jedoch eine Verletzungsgefahr für das Tier durch Überbeanspruchung infolge des plötzlichen Abbremsens verringert werden (vor einer Verletzung infolge Überbelastung "rutscht das Hufeisen in der Regel durch").

Neben dem Bodenkontaktbogen 9 weist das Hufeisen 1 auf seiner Unterseite zusätzlich noch im zehenseitigen Bereich 2 einen rampenförmig geformten Zehenbogen 11 auf, der ebenfalls der (vorzugsweise in eine Richtung wirkenden) Traktionserhöhung dient.

Weiterhin sind in beiden Ansichten noch Stollenlöcher 6, 7 zu erkennen. Vorliegend sind insgesamt drei Stollenlöcher 6, 7 zu erkennen, nämlich zwei hintere Stollenlöcher 6 (trachtenseitig), sowie ein vorderes Stollenloch 7, welches lediglich an einer Seite, in Längsrichtung gesehen etwa zwischen Hufeisenmitte und Zehenbereich 2 angeordnet ist. Zur Ermöglichung eines erhöhten Bodenkontakts können in diese Stollenlöcher 6, 7 Stollen eingeschraubt werden (wozu diese mit einem Innengewinde versehen sind). Vordere Stollenlöcher 7 sind typischerweise nur bei Hinterhufeisen vorgesehen (Fehlen dementsprechend bei Vorderhufeisen). Somit kann in aller Regel anhand des vorderen Stollenlochs 7 zwischen Links- und Rechtshufeisen sowie zwischen Vorder- und Hinterhufeisen unterschieden werden.

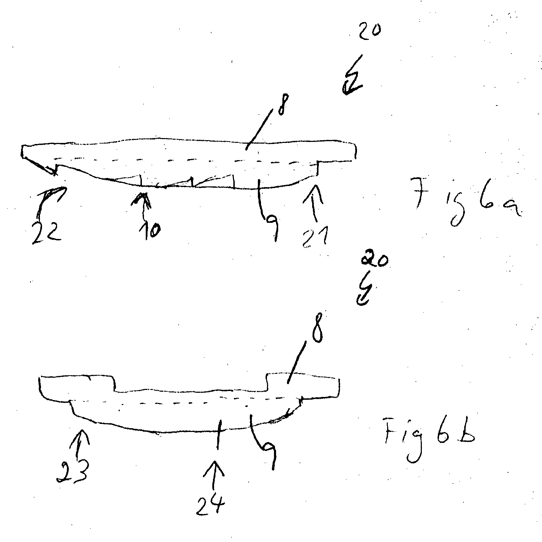

Das in den Figs. 1 und 2 dargestellte Ausführungsbeispiel eines Hufeisens 1 ist speziell für zumindest in gewissem Masse elastische Böden hervorragend geeignet. Wird das Tier jedoch regelmässig auf besonders harten Böden (beispielsweise Asphalt) geritten, so weist das Hufeisen 1 zumindest bis zu einem gewissen Grad die Nachteile einer Vielzahl von im Stand der Technik bekannten Hufeisen auf, nämlich dass durch den harten Aufschlag beim Auffussen (bis zu einem gewissen Grad auch beim Abfussen) eine vergleichsweise hohe Belastung für die Gelenke und Sehnen des Tieres auftritt (Aufschlagstoss). Diese kann zwar durch eine im Folgenden noch näher beschriebene, abgerundete Ausbildung des Bodenkontaktbogens 9 (siehe Figs. 6a, 6b) reduziert werden, jedoch nur bis zu einem gewissen Ausmass.

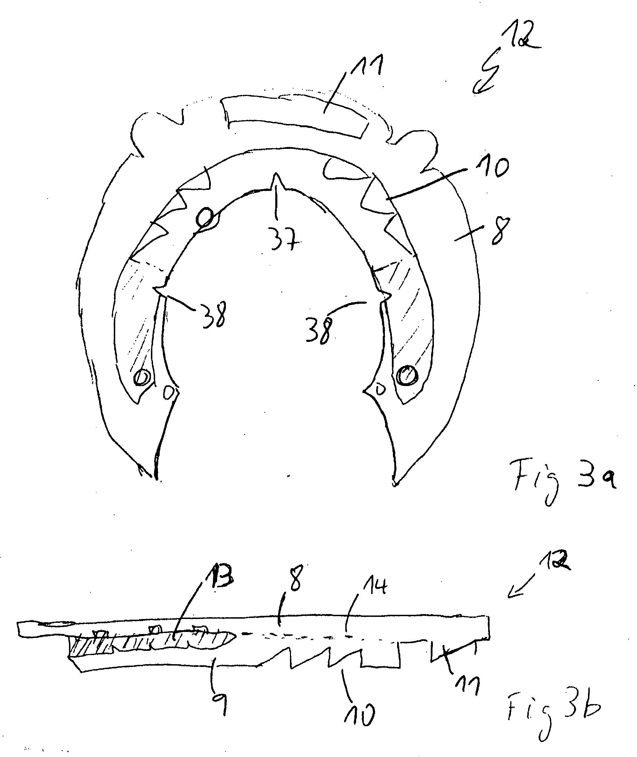

Beim in Fig. 3 dargestellten, zweiten Ausführungsbeispiel eines Hufeisens 12, ist daher ein Dämpfungselement 13 vorgesehen. Dieses Dämpfungselement 13 kann beispielsweise aus einem elastischen Material, wie einem Gummimaterial, gefertigt werden. Das Dämpfungselement 13 wird über einen gewissen Längenbereich des Hufeisens 12 zwischen der Hufkontaktplatte 8 und dem Bodenkontaktbogen 9 angeordnet (siehe insbesondere Fig. 3b, die das in Fig. 3a in Draufsicht von oben gezeigte Hufeisen 12 in einer seitlichen, schematischen Querschnittsansicht darstellt). In Fig. 3b ist neben der Anordnung des Dämpfungselements 13 auch gut die Wirkungsweise und Ausbildung des Zehenbogens 11 sowie der Rastverzahnung 10 zu erkennen. Im Übrigen ist das vorliegend dargestellte Hufeisen 12 im Wesentlichen analog zum in den Figs. 1 und 2 dargestellten Hufeisen 1 ausgebildet. Aus Vereinfachungsgründen wurden für im Wesentlichen gleichartig wirkende bzw. im Wesentlichen gleichartig ausgebildete Elemente identische Bezugszeichen verwendet (auch wenn diese zum Teil geringfügigen Modifikationen unterworfen sind). Weiterhin werden zur Vermeidung von unnötigen Wiederholungen im Wesentlichen gleichartig wirkende Elemente in der Regel nicht nochmals eingehend erläutert.

Fig. 3b kann man weiterhin entnehmen, dass Hufkontaktplatte 8 und Bodenkontaktplatte 9 einteilig, bevorzugt auch einstückig ausgebildet sind (dies gilt auch für das in den Figs. 1 und 2 dargestellte Ausführungsbeispiel, sowie für die noch im Folgenden dargestellten Ausführungsbeispiele). Die gestrichelte Hilfslinie zeigt lediglich die Ebenenabstufung 14 zwischen Bodenkontaktbogen 9 und Hufkontaktplatte 8 an. In einem hinteren, trachtenseitigen Teilbereich ist dagegen eine schlitzartige Ausnehmung vorgesehen, in die das Dämpfungselement 13 eingesetzt ist. Durch entsprechende Vorsprünge bzw. Ausnehmungen im Bereich des Bodenkontaktbogens 9, der Hüfkontaktplatte 8 sowie des Dämpfungselements 13, ist dieses im Wesentlichen unverlierbar im Hufeisen 1 festgelegt. Ein grosser Vorteil dieser Ausbildung ist, dass durch die spezielle Anordnung des Dämpfungselements 13 eine stossdämpfende Wirkung insbesondere beim Auffussen (wo üblicherweise ein besonders harter Aufschlag stattfindet) gewährleistet werden kann. Da Hufkontaktplatte 8 und Bodenkontaktbogen 9 aus einem federnden Stahlmaterial gefertigt sind, kann die durch das Dämpfungselement 13 bereitgestellte Dämpfungswirkung auch durch Durchbiegung von entsprechenden Teilen des Hufeisens 1 "aufrechterhalten werden". Da Hufeisen ohnehin regelmässig erneuert werden (typische Zeiten sind wenige Wochen bis wenige Monate), spielen Erwägungen hinsichtlich Ermüdungsbrüchen hierbei im Wesentlichen keine Rolle. Der direkte Metäll-Metall-Kontakt zwischen Bodenkontaktbogen 9 und Hufkontaktplatte 8 hat darüber hinaus den grossen Vorteil, dass eine seitliche Verschiebung zwischen Hufeisenoberseite und Hufeisenunterseite durch eine Kraftbeanspruchung praktisch nicht auftritt. Hierdurch können unter Umständen entscheidende Leistungsverluste, wie insbesondere Zeitverluste bei Pferderennen, vermieden werden (ein derartiges seitliches Verschieben von Ober- und Unterseite bei Hufeisen tritt bei Hufeisen im Stand der Technik auf, welche eine "vollflächig durchgehende" Dämpfungsplatte aufweisen).

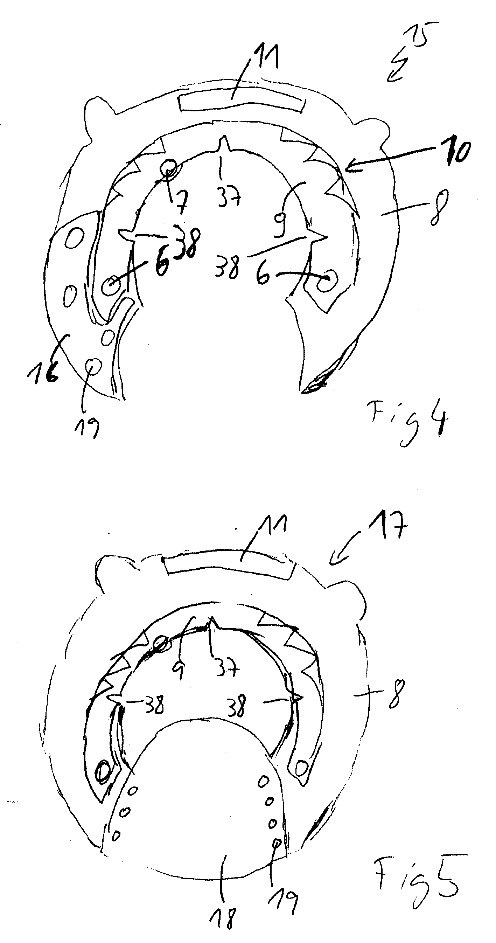

In Fig. 4 ist ein weiteres Ausführungsbeispiel für ein Hufeisen 15 dargestellt. Bei dem Hufeisen 15 kann es sich insbesondere auch um eine individuelle Modifikation der bereits vorab beschriebenen Hufeisen 1, 12 handeln, welche im Übrigen auch vergleichsweise problemlos von einem Hufschmied "vor Ort" durchgeführt werden kann. Bei der in Fig. 4 gewählten Draufsicht von unten ist neben der Hufkontaktplatte 8, dem Bodenkontaktbogen 9 sowie dem Zehenbogen 11 zusätzlich noch an einer Seite eine seitliche Unterstützungsplatte 16 vorgesehen. Eine derartige seitliche Unterstützungsplatte 16 kann beispielsweise bei gewissen physiognomischen Eigenschaften von Pferden vorteilhaft sein. Vorteilhaft kann die seitliche Unterstützungsplatte 16 aber auch insbesondere dann sein, wenn das Tier häufig in engen Bögen geritten wird, so wie dies beispielsweise beim Dressurreiten der Fall ist. Die seitliche Unterstützungsplatte 16 kann im Übrigen nicht nur an einer Seite, sondern selbstverständlich auch an beiden Seiten des Hufeisens 15 befestigt werden.

In Fig. 5 ist ein nochmals modifiziertes Ausführungsbeispiel eines Hufeisens 17, ebenfalls in einer Draufsicht von unten, dargestellt. Bei diesem Hufeisen 17 ist neben der bereits bekannten Hufkontaktplatte 8, dem Zehenbogen 11 und dem Bodenkontaktbogen 9 noch eine Strahlunterstützungsplatte 18 vorgesehen. Hierdurch kann eine gewisse Unterstützung des Tieres beim Auffussen gewährleistet werden. Insbesondere ist es auch denkbar, dass hierdurch ein Eindringen von Schnee und dergleichen in den Strahl eines Hufs verhindert werden kann (bei entsprechenden Witterungsbedingungen). Ein derartiges Eindringen von Schnee (oder sonstigen Fremdkörpern) kann für das Tier sehr unangenehm sein.

Möglich ist es natürlich auch, dass seitliche Unterstützungsplatte 16 und Strahlunterstützungsplatten 18 miteinander in einem Hufeisen kombiniert werden. Ein derartiger Aufbau ist vorliegend nicht näher dargestellt, jedoch offensichtlich. Seitliche Unterstützungsplatten 16 und Strahlunterstützungsplatten 18 können im Übrigen insbesondere durch Nieten 19 am betreffenden Hufeisen 15, 17 befestigt werden. Entsprechende Löcher für die Ausbildung einer Nietbefestigung können bereits "vorsorglich ab Werk" vorgesehen sein. Bevorzugt werden diese jedoch erst vom Hufschmied "vor Ort" ausgefertigt, da es dann möglich ist, die exakte Lage der betreffenden Platten 16, 18 individuell anzupassen und/oder die Ablängung von Hufeisenüberständen zu vereinfachen.

Neben der Stossdämpfung durch das Vorsehen von Dämpfungselementen (wie beispielsweise des vorab beschrieben Dämpfungselements 13) wird vorliegend auch vorgeschlagen, eine gewisse Dämpfungswirkung dadurch zu erreichen, dass bei einem Hufeisen 20 der Bodenkontaktbogen 9 konvex-abgerundet ausgebildet ist. Dies ist besonders gut in den Figs. 6a, 6b zu erkennen, die ein betreffendes Hufeisen 20 in einer Seitenansicht von der Seite aus gesehen (Fig. 6a) bzw. von vorne aus gesehen (Fig. 6b) zeigen. Durch die Abrundungen 21, 22 kann sowohl beim Auffussen (trachtenseitige Abrundung 21) als auch beim Abdrücken/Abfussen (zehenseitige Abrundung 22) eine gelenk- und sehnenschonende "fliessende Bewegung" realisiert werden. Bei ersten Versuchen mit experimentellen Hufeisen hat sich gezeigt, dass dies unter anderem dazu führt, dass die Pferde aufgrund des für sie ganz offensichtlich spürbaren deutlichen Komfortgewinns "beherzter" auftreten, sodass die Gangweite des Tieres erhöht wird und hierdurch zum Teil beachtliche Leistungsgewinne erzielbar sind, die so nicht zu erwarten waren.

Auch eine (zusätzlich oder optional zur vorne-hinten-Abrundung 21, 22 vorgesehene) seitliche Abrundung 23, wie sie in Fig. 6b zu erkennen ist, kann vorgesehen werden und sich speziell dann als vorteilhaft erweisen, wenn das Tier besonders häufig in engen Bögen geritten wird (wie dies beispielsweise bei Dressurpferden der Fall ist). Bevorzugt ist dabei, wenn der Bereich der maximalen Erhebung 24 der seitlichen Abrundung 23 etwas asymmetrisch zur Mittellinie des Hufeisens 20 versetzt ist, bevorzugt zur Innenseite des Tieres. Dies scheint für das betreffende Tier besonders komfortabel zu sein. Zur Ausbildung einer derartigen Modifikation ist es dabei typischerweise erforderlich, dass insbesondere das Bodenkontaktelement einen "flächigeren Aufbau" aufweisen muss. Es wird dementsprechend in einem gewissen Ausmass von der "klassischen Hufeisenform" abgewichen (weshalb der Begriff "Bodenkontaktbogen 9" nur noch bis zu einem gewissen Grad zutreffend ist).

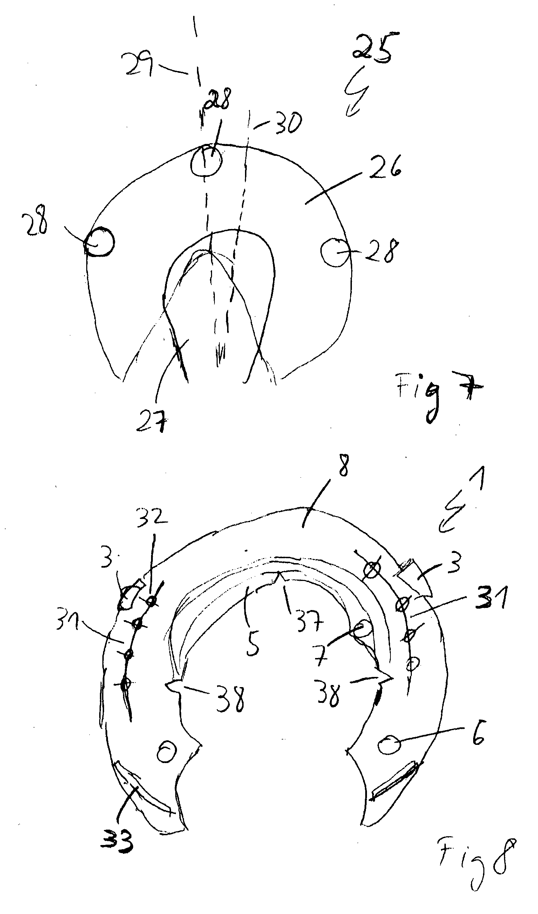

In Fig. 7 ist in einer schematischen Ansicht der Hufbereich eines Pferdebeins 25 dargestellt. Zu erkennen ist insbesondere der eigentliche Huf 26. Weiterhin ist das Hufbein 27 eingezeichnet. Der Huf 26 ist mit einer Mehrzahl von Markierungseinrichtungen 28 versehen. Vorliegend handelt es sich bei den Markierungseinrichtungen 28 um einfache (metallische) Reisszwecken, die in das Hornmaterial des Hufs 26 eingedrückt werden. Bevorzugt werden die Markierungseinrichtungen 28 in bzw. in unmittelbarer Nähe der sogenannten weissen Linie des Hufs 26 eingedrückt. Bevorzugt ist es, wenn die Markierungseinrichtungen korrespondierend zur Hufform bzw. zum Gelenk ausgerichtet sind. Im vorliegend dargestellten Ausführungsbeispiel werden die Markierungseinrichtungen 28 an der Vorderseite des Hufs 26 (der Hufzehe) sowie an den Seiten des Hufs 26 angeordnet. Bei einer Röntgenaufnahme können die Markierungseinrichtungen 28 aufgrund ihres metallischen Materials gut erkannt werden. Ebenso kann in einer Röntgenaufnahme neben dem Hornmaterial des Hufs 26 auch die Lage und Ausrichtung des Hufbeins 27 (Knochenmaterial) gut erkannt werden. Es ist bei Pferden nicht unüblich, dass aufgrund eines leicht asymmetrischen Wachstums des Hufs 26 die Längsrichtung 29 des Hufs 26 (durch eine gestrichelte Linie eingezeichnet) nicht genau mit der Längsrichtung 30 des Hufbeins 27 (durch eine weitere gestrichelte Linie eingezeichnet) übereinstimmt. Im vorliegend dargestellten Ausführungsbeispiel fallen beide Richtungen um einige Grad auseinander.

Der Erfinder hat festgestellt, dass es wesentlich ist, dass der Bodenkontaktbogen 9 eines Hufeisens 1, 12, 15, 17, 20, 25, 34 korrespondierend zum Hufbein 27 angeordnet ist. Das heisst, der Bodenkontaktbogen 9 soll symmetrisch zum Hufbein 27 liegend dieses "bogenförmig umgreifen" also ähnlich wie ein "ideal gewachsener Huf" zu liegen kommen. Eine derartige Positionierung kann beispielsweise mithilfe des in Fig. 7 skizzierten Röntgenbilds erfolgen. Zur Sicherstellung der korrekten Positionierung dienen die Markierungseinrichtungen 28 sowie die Justagekerben 37, 38 bei einem Hufeisen 1, 12, 15, 17, 20 (gegebenenfalls sind auch weitere Justagemarkierungen oder dergleichen denkbar).

Die Positionierung des (vorkonfektionierten) Hufeisens erfolgt nun derart, dass der Hufschmied (oder eine sonstige Person) mittels entsprechender Markierungslinien 31 das (vorkonfektionierte) Hufeisen 1 (es ist lediglich exemplarisch das erste Ausführungsbeispiel eines Hufeisens 1 gewählt; selbstverständlich sind auch die anderen dargestellten Ausführungsformen von Hufeisen sowie weitere denkbare Variationen verwendbar) derart relativ zum Hufbein 27 zu liegen bringt, dass es wie ein "ideal gewachsener Huf" liegt (insbesondere der Bodenkontaktbogen 9). Die Markierungslinien 31 verlaufen dabei sinnvollerweise so, dass diese (zumindest die "Längslinien") der sogenannten weissen Linie des Hufs 26 folgen (in diesem Bereich ist der optimale Platz für das Einbringen von Hufeisennägeln).

Im Bereich der Markierungslinien 31 werden anschliessend vom Hufschmied die Nagellöcher 32 für die Hufeisennägel gebohrt.

Demgegenüber ergibt sich die Lage und Anordnung der Hufkontaktplatte 8 geometriebedingt aus der Formgebung des Hufs 26. Wie bereits erwähnt, ist ein vorkonfektioniertes Hufeisen 1 mit einem gewissen Überstand gefertigt. Der Hufschmied zeichnet dementsprechend auch Ablängungslinien 33 ein, mit deren Hilfe der Materialüberstand auf einfache Weise und passgenau entfernt werden kann. Darüber hinaus werden die Zehenkappen 3 lagerichtig nach oben gebogen, sodass sie das Hufeisen 1 zusätzlich am Huf 26 lagern.

Dank des vorgeschlagenen Beschlagverfahrens, kann ein optimaler Komfort für das Tier bei gleichzeitig optimierter Leistungsentfaltung realisiert werden.

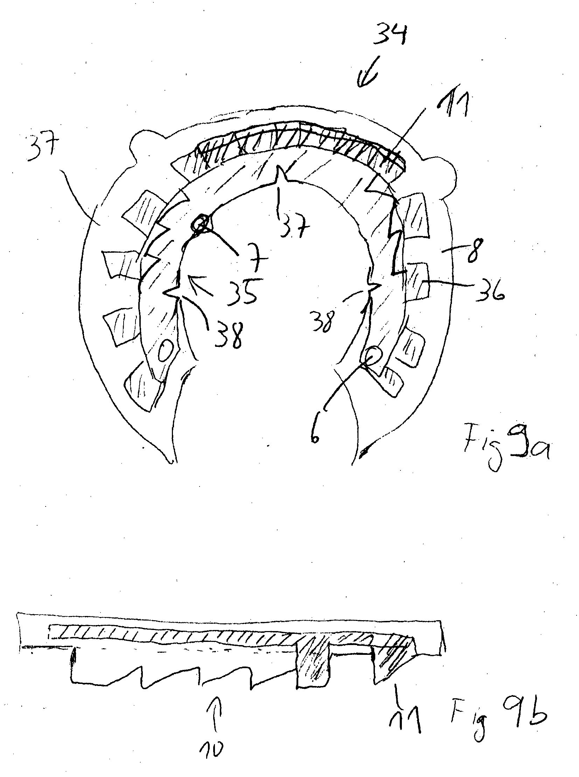

In Fig. 9 ist schliesslich noch ein weiteres denkbares Hufeisen 34 in unterschiedlichen Ansichten dargestellt (Fig. 9a: Draufsicht von unten auf den Bodenkontaktbogen 9 sowie die Hufkontaktplatte 8; Fig. 9b: schematische Draufsicht von der Seite aus gesehen). Bei diesem Hufeisen 34 sind zur zusätzlichen Stossdämpfung unterschiedliche Materialien an unterschiedlichen Stellen vorgesehen. Zur Verdeutlichung der Ansicht sind dabei vorliegend Bereiche aus einem metallischen Material (vorliegend Stahl) schraffiert eingezeichnet, wohingegen Bereiche aus einem Hartplastikmaterial ohne Schraffierung eingezeichnet sind.

Wie man den Figs. 9a, 9b insbesondere im Vergleich entnehmen kann, sind lediglich besonders stark beanspruchte Bereiche, sowie Bereiche, die die Gesamtintegrität des Hufeisens 34 gewährleisten sollen, aus einem metallischen Material gefertigt. Dies betrifft vorliegend einen strahlenkranzartigen, bogenartigen Bereich 35 des Hufeisens 34. Von diesem strahlenkranzartigen Bereich 35 gehen - wie der Name impliziert - Vorsprünge 36 in radial nach aussen gerichteter Richtung aus. Die restlichen Bereiche sind von einem Hartplastikmaterial umspritzt, welches eine starke Dämpfungswirkung (zumindest im Verhältnis zu metallischem Material) aufweist.

Wie man in Fig. 9b erkennen kann, ist der strahlenkranzartige Bereich 35 darüber hinaus nur in "wenigen Bereichen nach aussen hin sichtbar". Dies betrifft besonders stark beanspruchte Bereiche auf der Unterseite des Hufeisens 34, insbesondere den Bereich des Zehenbogens 11 sowie einen Teilbereich der Rastverzahnung 10.

Der Vollständigkeit halber wird darauf hingewiesen, dass es selbstverständlich möglich ist, die in den unterschiedlichen Ausführungsformen von Hufeisen dargestellten und beschriebenen Merkmale auch miteinander (auf sinnvolle Weise) zu kombinieren.

## Patentansprüche

1. Hufeisen (1, 12, 15, 17, 20, 25, 34), aufweisend ein Hufsohlenelement (8) sowie ein Bodenkontaktelement (9, 11), **dadurch gekennzeichnet, dass** Hufsohlenelement (8) sowie Bodenkontaktelement (9, 11) derart dimensioniert und anpassbar sind, dass in einem an einem Huf (26) montierten Zustand des Hufeisens, das Hufsohlenelement (8) zumindest im Wesentlichen korrespondierend zum Huf (26) und das Bodenkontaktelement (9, 11) zumindest im Wesentlichen korrespondierend zum Hufbein (27) und/oder zur weissen Linie eines Hufs (26) ausgerichtet werden kann.

2. Hufeisen (1, 12, 15, 17, 20, 25, 34) nach Anspruch 1, **dadurch gekennzeichnet, dass** das Hufeisen in Form eines (1, 12, 15, 17, 20, 25, 34) Hufeisenbausatz vorliegt, derart, dass Hufsohlenelement (8) und Bodenkontaktelement (9) als getrennte Einzelelemente vorliegen und mittels zumindest eines Verbindungselements miteinander verbunden werden können, wobei bevorzugt das Hufsohlenelement (8), das Bodenkontaktelement (9, 11) und/oder das zumindest eine Verbindungselement derart ausgebildet und eingerichtet sind, dass eine unterschiedliche Festlegbarkeit des Hufsohlenelements (8) relativ zum Bodenkontaktelement (9, 11) möglich ist.

3. Hufeisen (1, 12, 15, 17, 20, 25, 34) nach Anspruch 1, **dadurch gekennzeichnet, dass** das Hufsohlenelement (8) und das Bodenkontaktelement (9, 11) im Wesentlichen einteilig, insbesondere im Wesentlichen einstückig ausgebildet sind.

4. Hufeisen (1, 12, 15, 17, 20, 25, 34) nach einem der vorangehenden Ansprüche, **dadurch gekennzeichnet, dass** das Hufeisen, insbesondere das Bodenkontaktelement (8) und/oder das Hufsohlenelement (9, 11) asymmetrisch ausgebildet sind und/oder dass das Hufeisen als ein Linkshufeisen, als ein Rechtshufeisen, als ein Vorderhufeisen und/oder als ein Hinterhufeisen ausgebildet ist.

5. Hufeisen (1, 12, 15, 17, 20, 25, 34) nach einem der vorangehenden Ansprüche, **dadurch gekennzeichnet, dass das** Hufeisen, insbesondere das Hufsohlenelement (8), mit einem Übermass ausgebildet ist und/oder dass das Hufeisen, insbesondere das Hufsohlenelement (8), eine verringerte Anzahl, bevorzugt im Wesentlichen keine, besonders bevorzugt keine Einrichtung (32) zur Aufnahme eines Hufbefestigungmittels aufweist.

6. Hufeisen (1, 12, 15, 17, 20, 25, 34) nach einem der vorangehenden Ansprüche, **dadurch gekennzeichnet, dass** Bodenkontaktelement (9, 11) und/oder Hufsohlenelement (8) zumindest eine Rutschhemmeinrichtung (5, 6, 7, 10, 11) aufweisen, insbesondere eine auf Formgebung (5, 6, 7, 10, 11) beruhende Rutschhemmeinrichtung, besonders bevorzugt eine richtungsselektiv wirkende Rutschhemmeinrichtung (10, 11).

7. Hufeisen (1, 12, 15, 17, 20, 25, 34) nach einem der vorangehenden Ansprüche, **gekennzeichnet, durch** eine Stossdämpfungseinrichtung (13, 37), welche bevorzugt als bereichsweise angeordnete Stossdämpfungseinrichtung (13, 37) ausgebildet ist, insbesondere als bereichsweise angeordnete Zwischenlageeinrichtung (13) ausgebildet ist.

8. Hufeisen (1, 12, 15, 17, 20, 25, 34) nach Anspruch 7, **dadurch gekennzeichnet, dass** die Stossdämpfungseinrichtung (13, 37) zumindest teilweise aus einem Elastomermaterial und/oder einem elastisch federnden Metallmaterial (8, 9) ausgebildet ist.

9. Hufeisen (1, 12, 15, 17, 20, 25, 34) nach einem der vorangehenden Ansprüche, **dadurch gekennzeichnet, dass** das Hufeisen (1, 12, 15, 17, 20, 25, 34), insbesondere das Hufsohlenelement (8) zumindest ein Schraubgewinde zur Aufnahme eines Hufbefestigungsmittels aufweist.

10. Hufeisen (1, 12, 15, 17, 20, 25, 34) nach einem der vorangehenden Ansprüche, **dadurch gekennzeichnet, dass** bei dem Hufeisen (1, 12, 15, 17, 20, 25, 34), insbesondere beim Bodenkontaktelement (9, 11) zumindest bereichsweise eine Abrolleinrichtung (21, 22, 23) vorgesehen ist, insbesondere eine zehenseitige Abrolleinrichtung (22), eine trachtenseitige Abrolleinrichtung (21) und/oder zumindest eine seitlich wirkende Abrolleinrichtung (23).

11. Hufeisen (1, 12, 15, 17, 20, 25, 34) nach einem der vorangehenden Ansprüche, **dadurch gekennzeichnet, dass** zumindest eine Unterstützungseinrichtung (16, 18) vorgesehen ist, insbesondere zumindest eine seitliche Unterstützungseinrichtung (16) und/oder eine Strahlunterstützungseinrichtung (18), wobei zumindest eine Unterstützungseinrichtung (16, 18) bevorzugt irreversibel mit dem Hufeisen befestigt ist und/oder wird.

12. Hufeisen (1, 12, 15, 17, 20, 25, 34) nach einem der vorangehenden Ansprüche, **gekennzeichnet durch** zumindest eine Justagemarkierung (37, 38), insbesondere zur Justage des Hufsohlenelements (8) mit einem Huf (26) und/oder zur Justage der Positionierung des Bodenkontaktelements (9) mit einem Hufbein (27).

13. Verfahren zur Ausbildung eines Hufeisens (1, 12, 15, 17, 20, 25, 34), insbesondere unter Verwendung eines Hufeisens (1, 12, 15, 17, 20, 25, 34) nach einem der Ansprüche 1 bis 13, **dadurch gekennzeichnet, dass** das Hufeisen (1, 12, 15, 17, 20, 25, 34) derartig angepasst wird, dass ein den Huf (26) kontaktierendes Hufsohlenelement (8) im Wesentlichen korrespondierend zum Huf (26) ausgebildet und/oder angeordnet wird und ein den Boden kontaktierendes Bodenkontaktelement (9, 11) im Wesentlichen korrespondierend zum Hufbein (27) und/oder zur weissen Linie eines Hufs ausgebildet und/oder angeordnet wird.

14. Verfahren nach Anspruch 13, **dadurch gekennzeichnet, dass** das Hufeisen unter Verwendung von Messvorrichtungen individuell an die Masse eines mit dem Hufeisen zu beschlagenden Tieres angepasst wird.

## Claims

1. A horseshoe (1, 12, 15, 17, 20, 25, 34) featuring a hoof sole element (8), as well as a ground contact element (9, 11), **characterized in that** the hoof sole element (8) and the ground contact element (9, 11) are dimensioned and adaptable such that the hoof sole element (8) can be aligned at least essentially corresponding to the hoof (26) and the ground contact element (9, 11) can be aligned at least essentially corresponding to the coffin bone (27) and/or the white line of a hoof (26) in the attached state of the horseshoe on a hoof (26).

2. The horseshoe (1, 12, 15, 17, 20, 25, 34) according to claim 1, **characterized in that** the horseshoe is realized in the form of a horseshoe kit (1, 12, 15, 17, 20, 25, 34), in which the hoof sole element (8) and the ground contact element (9) are provided in the form of separate individual elements and can be connected to one another by means of at least one connecting element, wherein the hoof sole element (8), the ground contact element (9, 11) and/or the at least one connecting element preferably are realized and configured in such a way that the hoof sole element (8) can be variably fixed relative to the ground contact element (9, 11).

3. The horseshoe (1, 12, 15, 17, 20, 25, 34) according to claim 1, **characterized in that** the hoof sole element (8) and the ground contact element (9, 11) are essentially realized integrally, particularly in essentially one piece.

4. The horseshoe (1, 12, 15, 17, 20, 25, 34) according to one of the preceding claims, **characterized in that** the horseshoe, particularly the ground contact element (8) and/or the hoof sole element (9, 11), is/are realized asymmetrically and/or that the horseshoe is realized in the form of a left horseshoe, a right horseshoe, a front horseshoe and/or a rear horseshoe.

5. The horseshoe (1, 12, 15, 17, 20, 25, 34) according to one of the preceding claims, **characterized in that** the horseshoe, particularly the hoof sole element (8), is realized with an oversize and/or that the horseshoe, particularly the hoof sole element (8), features a reduced number or, in particular, essentially no devices (32) for receiving a hoof fastening means, preferably no such device at all.

6. The horseshoe (1, 12, 15, 17, 20, 25, 34) according to one of the preceding claims, **characterized in that** the ground contact element (9, 11) and/or the hoof sole element (8) feature at least one slip-inhibiting device (5, 6, 7, 10, 11), particularly a slip-inhibiting device that is based on shape (5, 6, 7, 10, 11), preferably a slip-inhibiting device (10, 11) that acts in a directionally selective fashion.

7. The horseshoe (1, 12, 15, 17, 20, 25, 34) according to one of the preceding claims, **characterized by** a shock-absorbing device (13, 37) that is preferably realized in the form of a sectionally arranged shock-absorbing device (13, 37), particularly a sectionally arranged intermediate layer device (13).

8. The horseshoe (1, 12, 15, 17, 20, 25, 34) according to claim 7, **characterized in that** the shock-absorbing device (13, 37) is at least partially made of an elastomer material and/or an elastically resilient metallic material (8, 9).

9. The horseshoe (1, 12, 15, 17, 20, 25, 34) according to one of the preceding claims, **characterized in that** the horseshoe (1, 12, 15, 17, 20, 25, 34), particularly the hoof sole element (8), features at least one screw thread for receiving a hoof fastening means.

10. The horseshoe (1, 12, 15, 17, 20, 25, 34) according to one of the preceding claims, **characterized in that** the horseshoe (1, 12, 15, 17, 20, 25, 34), particularly the ground contact element (9, 11), is at least sectionally provided with a roll-off device (21, 22, 23), particularly with a roll-off device (22) on the toe side, a roll-off device (21) on the heel side and/or at least one laterally acting roll-off device (23).

11. The horseshoe (1, 12, 15, 17, 20, 25, 34) according to one of the preceding claims, **characterized in that** at least one supporting device (16, 18) is provided, particularly at least one lateral supporting device (16) and/or one frog supporting device (18), wherein at least one supporting device (16, 18) preferably is irreversibly fixed on the horseshoe.

12. The horseshoe (1, 12, 15, 17, 20, 25, 34) according to one of the preceding claims, **characterized by** at least one alignment marking (37, 38), particularly for aligning the hoof sole element (8) with a hoof (26) and/or for aligning the position of the ground contact element (9) with a coffin bone (27).

13. A method for configuring a horseshoe (1, 12, 15, 17, 20, 25, 34), particularly using a horseshoe (1, 12, 15, 17, 20, 25, 34) according to one of claims 1-13, **characterized in that** the horseshoe (1, 12, 15, 17, 20, 25, 34) is adapted in such a way that a hoof sole element (8) contacting the hoof (26) is essentially realized and/or arranged corresponding to the hoof (26) and a ground contact element (9, 11) contacting the ground is essentially realized and/or arranged corresponding to the coffin bone (27) and/or to the white line of a hoof.

14. The method according to claim 13, **characterized in that** the horseshoe is individually adapted to the dimensions of an animal to be fitted with the horseshoe by utilizing measuring devices.

## Revendications

1. Fer à cheval (1, 12, 15, 17, 20, 25, 34), comportant un élément de sole (8) ainsi qu'un élément de contact avec le sol (9, 11), **caractérisé en ce que** l'élément de sole (8) ainsi que l'élément de contact avec le sol (9, 11) sont dimensionnés et adaptables de telle manière que dans un état monté du fer à cheval sur un sabot (26), l'élément de sole (8) peut être orienté au moins correspondant pour l'essentiel au sabot (26) et l'élément de contact avec le sol (9, 11) au moins pour l'essentiel correspondant à l'os du sabot (27) et/ou au bord plantaire d'un sabot (26).

2. Fer à cheval (1, 12, 15, 17, 20, 25, 34), selon la revendication 1, **caractérisé en ce que** le fer à cheval existe sous la forme d'un élément prêt-à-monter de fer à cheval (1, 12, 15, 17, 20, 25, 34) de telle sorte que l'élément de sole (8) et l'élément de contact avec le sol (9) existent en tant qu'éléments individuels séparés et peuvent être reliés l'un à l'autre au moyen d'au moins un élément de liaison, l'élément de sole (8), l'élément de contact avec le sol (9, 11) et/ou au moins un élément de liaison étant constitués et agencés de telle manière qu'une fixabilité différente de l'élément de sole (8) est possible par rapport à l'élément de contact avec le sol (9, 11).

3. Fer à cheval (1, 12, 15, 17, 20, 25, 34), selon la revendication 1, **caractérisé en ce que** l'élément de sole (8) et l'élément de contact avec le sol (9, 11) sont constitués pour l'essentiel en une seule partie, en particulier pour l'essentiel en une seule pièce.

4. Fer à cheval (1, 12, 15, 17, 20, 25, 34), selon l'une quelconque des revendications précédentes, **caractérisé en ce que** le fer à cheval, en particulier l'élément de contact avec le sol (8) et/ou l'élément de sole (9, 11) sont constitués de manière asymétrique et/ou **en ce que** le fer à cheval est constitué comme un fer à cheval gauche, comme une fer à cheval droit, comme un fer à cheval antérieur et/ou comme un fer à cheval postérieur.

5. Fer à cheval (1, 12, 15, 17, 20, 25, 34), selon l'une quelconque des revendications précédentes, **caractérisé en ce que** le fer à cheval, en particulier l'élément de sole (8) est constitué avec une surmesure et/ou **en ce que** le fer à cheval, en particulier l'élément de sole (8), comporte un nombre réduit, de préférence pour l'essentiel de façon particulièrement préférée, ne comporte aucun dispositif (32) destiné à loger un moyen de fixation au sabot.

6. Fer à cheval (1, 12, 15, 17, 20, 25, 34), selon l'une revendications précédentes, **caractérisé en ce que** le l'élément de contact avec le sol (9, 11) et/ou l'élément de sole (8) comportent au moins un dispositif antidérapant (5, 6, 7, 10, 11), en particulier un dispositif antidérapant reposant sur une conformation (5, 6, 7, 10, 11), en particulier de préférence, un dispositif antidérapant (10, 11) agissant de façon sélective eu égard à la direction.

7. Fer à cheval (1, 12, 15, 17, 20, 25, 34), selon l'une quelconque des revendications précédentes, **caractérisé en ce qu'**un dispositif d'amortissement (13, 37), lequel est de préférence constitué comme un dispositif d'amortissement (13, 37) disposé par secteur, en particulier constitué comme dispositif intermédiaire (13) disposé par secteur.

8. Fer à cheval (1, 12, 15, 17, 20, 25, 34), selon la revendication 7, **caractérisé en ce que** le dispositif d'amortissement (13, 37) est constitué au moins en partie d'un matériau élastomère et/ou d'un matériau métallique (8, 9) faisant ressort de façon élastique.

9. Fer à cheval (1, 12, 15, 17, 20, 25, 34), selon l'une quelconque des revendications précédentes, **caractérisé en ce que** le fer à cheval (1, 12, 15, 17, 20, 25, 34), en particulier l'élément de sole (8) comporte au moins un filetage de vis pour recevoir un moyen de fixation au sabot.

10. Fer à cheval (1, 12, 15, 17, 20, 25, 34), selon l'une quelconque des revendications précédentes, **caractérisé en ce qu'**un dispositif de déroulement (21, 22, 23) est prévu au moins par secteur pour le fer à cheval (1, 12, 15, 17, 20, 25, 34), en particulier pour l'élément de contact avec le sol (9, 11), en particulier un dispositif de déroulement (22) du côté pince, un dispositif de déroulement (21) du côté talon et/ou au moins un dispositif de déroulement (23) agissant latéralement.

11. Fer à cheval (1, 12, 15, 17, 20, 25, 34), selon l'une quelconque des revendications précédentes, **caractérisé en ce qu'**au moins un dispositif de support (16, 18) est prévu, en particulier au moins un dispositif de support latéral (16) et/ou un dispositif de support de la fourchette (18), au moins un dispositif de support (16, 18) est et/ou sera fixé au fer à cheval de préférence de façon irréversible.

12. Fer à cheval (1, 12, 15, 17, 20, 25, 34), selon l'une quelconque des revendications précédentes, **caractérisé par** au moins un repère d'ajustage (37, 38), en particulier pour ajuster l'élément de sole (8) avec un sabot (26) et/ou pour ajuster le positionnement de l'élément de contact avec le sol (9) avec un os de sabot (27).

13. Procédé destiné à la constitution d'un fer à cheval (1, 12, 15, 17, 20, 25, 34), en particulier en utilisant un fer à cheval (1, 12, 15, 17, 20, 25, 34) selon l'une quelconque des revendications 1 à 13, **caractérisé en ce que** le fer à cheval (1, 12, 15, 17, 20, 25, 34), est adapté de telle manière qu'un élément de sole (8) en contact avec le sabot (26) est constitué et/ou disposé pour l'essentiel correspondant au sabot (26) et un élément de contact avec le sol (9, 11) en contact avec le sol est constitué et/ou disposé pour l'essentiel correspondant à l'os du sabot (27) et/ou à la ligne blanche d'un sabot.

14. Procédé selon la revendication 13, **caractérisé en ce que** le fer à cheval est adapté individuellement aux mesures d'un animal ferré avec le fer à cheval en utilisant des dispositifs de mesure.
